# EUROPEAN PATENT SPECIFICATION

(11) **EP 3 584 619 B1**
(45) Date of publication and mention of the grant of the patent: **27.11.2024**
(21) Application number: 18865348.9
(22) Date of filing: 27.04.2018
(51) Int. Cl.: G02B 6/54, H02G 3/40, G02B 6/44, G02B 6/46

(54) **OPTICAL CABLE AND WALL-DRILLING AUXILIARY TOOL COMBINED STRUCTURE**
KOMBINIERTE STRUKTUR AUS OPTISCHEM KABEL UND WANDBOHRENDEM HILFSWERKZEUG
STRUCTURE COMBINÉE D'OUTIL AUXILIAIRE À PERCER UNE PAROI ET DE CÂBLE OPTIQUE

(43) Date of publication of application: 25.12.2019
(73) Proprietor: Huawei Technologies Co., Ltd., Shenzhen, Guangdong 518129 (CN)
(72) Inventor: LI, Yuanyuan, Shenzhen, Guangdong 518129 (CN); WANG, Bo, Shenzhen, Guangdong 518129 (CN); CHEN, Yangquan, Shenzhen, Guangdong 518129 (CN); WU, Wenxin, Shenzhen, Guangdong 518129 (CN)
(74) Representative: Goddar, Heinz J.
(86) International application number: PCT/CN2018/084932
(87) International publication number: WO 2019/205109

(56) References cited:
- EP-A2- 1 335 224
- CN-A- 105 895 256
- CN-U- 203 422 513
- CN-U- 203 480 104
- GB-A- 2 190 457
- US-A- 4 796 970
- US-A- 5 971 035
- US-A1- 2002 040 731
- US-A1- 2010 202 748
- US-A1- 2017 353 018

## Description

### TECHNICAL FIELD

This application relates to the field of optical communications technologies, and in particular, to an assembled structure of a cable and an auxiliary tool for wall penetration and a cable.

### BACKGROUND

With development of the modern society and explosive growth of information, people have an increasing requirement on a network throughput capability. Due to exclusive features such as an ultra-high bandwidth and low electromagnetic interference, optical transmission gradually becomes a mainstream solution of modern communication. Particularly, a network newly established at the present stage, for example, an access network represented by fiber to the home (Fiber To The Home, FTTH) is currently deployed on a large scale.

During construction of a fiber-to-the-home network, from an optical line terminal (Optical Line Terminal, OLT) to an access terminal box (Access terminal box, ATB) of a user, a feeder cable, a distribution cable, and a drop cable need to be passed through in sequence. The drop cable is configured to connect a fiber division box to the access terminal box (Access terminal box, ATB). In a construction manner, the drop cable is usually laid along an in-wall pipe. For mounting of a cable that passes a wall, a pull rope needs to be embedded in the pipe, and the cable is pulled during construction. Two persons are required in such an installation manner. One person pushes the cable inward at an inlet of the in-wall pipe, and the other person pulls the cable outward at an outlet of the in-wall pipe. Construction costs are relatively high, and currently, no pull rope is embedded in most in-wall pipes. In addition, in actual cases, most in-wall pipes have sharp angles and relatively long distances. Pipes in some houses may be occupied by other cables such as copper cables, and remaining space is narrow. It is difficult to mount a cable with a large outer diameter. US 2010/202748 A1 discloses a hauling shroud, a cable termination and methods of hauling a fibre optic cable with a pre-connected optic termination along a conduit. The hauling shroud protects the optic termination when being hauled along the conduit. The hauling shroud includes a first housing member and a second housing member such that the first housing member and the second housing member can be joined together to enclose the optic termination.
CN 203 480 104 U discloses oil and gas pipes returns and drags with optical cable and special-purpose construction draw-gear thereof with a hole.
US 2002/040731 A1 discloses a method of introducing a fiber optic conduit into a pressurized gas pipeline that includes the step of introducing a translating member into the pressurized gas pipeline via an entry port in a first drilling nipple attached to the pressurized gas pipeline. Tools are deployed within a first pressure lock housing attached to the first drilling nipple by using a first manipulator located in the first air lock housing.

US2017353018 A1 discloses an end piece provided for guiding a needle intended to be inserted in a sheath occupied by at least one installed cable. The end piece includes: a free first end referred to as a head of a shape suited to slipping in between an internal wall of the sheath and the at least one installed cable; a second end fixed to the needle; and a part connecting the two ends and referred to as a shank. The shank has a flexibility that increases toward the head.

### SUMMARY

The present invention provides an assembled structure of a cable and an auxiliary tool for wall penetration according to claim 1. Embodiments of this application provide an assembled structure of a cable and an auxiliary tool for wall penetration and a cable, by using which one person can lay a drop cable with low construction costs and the cable easily passes through a plurality of angles inside an in-wall pipe.

The following technical solutions are used in the embodiments of this application to achieve the foregoing objective:

According to a first aspect, this application provides an assembled structure of a cable and an auxiliary tool for wall penetration, including a traction member, and a guide pipe, where one end of the traction member is securely connected to the cable, a pipe hole of the guide pipe is used to allow the cable to pass therethrough, and a gap exists between an inner wall of the guide pipe and an outer wall of the cable.

According to the assembled structure of a cable and an auxiliary tool for wall penetration provided in this embodiment of this application, when a drop cable is laid, the traction member may first pass into a wall, and then the cable sleeved with the guide pipe passes into an in-wall pipe, so that the guide pipe is laid on one or more angles close to an inlet of the in-wall pipe, the guide pipe is fastened, and the cable continues to be pushed inward to the wall. Due to the guide pipe, the cable can successfully pass through the one or more angles close to the inlet of the in-wall pipe. In addition, because the traction member can successfully and smoothly pass through the angles of the in-wall pipe, the cable may be guided to successfully pass through the angle of the in-wall pipe, so that the cable easily passes through the angle during laying construction, and one person can lay the drop cable with low construction costs.

According to a first aspect, the traction member includes a traction rod and a traction head fastened to a first end of the traction rod. The traction rod is made of an elastic material, the traction head has a smooth surface, and a second end of the traction rod is securely connected to one end of the cable. With a smooth surface, the traction head can successfully and smoothly pass through the angle of the in-wall pipe. After the traction head passes through the angle, the traction rod connected behind the traction head may enter the angle. Because the traction rod is made of an elastic material, the traction rod may have an elastic deformation. Therefore, the traction rod may experience a bending deformation having a radian similar to that of the angle, so that the traction rod successfully passes through the angle and guides the cable to pass through the angle along a same radian. Therefore, the cable easily passes through the angle during laying construction, and one person can lay a drop cable with low construction costs.

In a possible implementation, the second end of the traction rod is provided with a mounting hole, the mounting hole extends in a length direction of the traction rod, and the cable passes through the mounting hole and is adhesively fastened to the mounting hole. In this way, the cable is conveniently mounted and stably connected.

In a possible implementation, the traction head is of a spherical structure, an ellipsoidal structure, or a pyramid structure.

In a possible implementation, the traction head is provided with a through hole. In this way, a mounting manner of a pull cable may be compatible, and a weight of the traction head may be reduced by using the through hole, thereby reducing a force of friction between the traction head and the in-wall pipe.

The traction rod is a flat rod. Therefore, the traction rod conveniently passes through the in-wall pipe of narrow space.

In a possible implementation, an inner wall of the pipe hole of the guide pipe is coated with a smooth coating. Therefore, a friction resistance of the cable passing through the guide pipe is reduced.

In a possible implementation, a material of the guide pipe is a low smoke zero halogen (Low Smoke Zero Halogen, LSZH) material composed of polyolefin.

In a possible implementation, the cable includes a cable core, the cable core is wrapped with an insulating sheath, an outer side of the insulating sheath is wrapped with an outer jacket, a reinforcing core wire passes through the outer jacket in an extension direction of the cable core, and the insulating sheath and the outer jacket are not adhered to each other when the insulating sheath and the outer jacket are in close contact with each other. The reinforcing core wire may improve strength and toughness of the cable, so that the cable easily passes through the pipe. In addition, when the outer jacket is stripped off, difficult separation caused by adhesion of the outer jacket to the insulating sheath can be avoided.

In a possible implementation, a material of the insulating sheath is an LSZH material composed of polyolefin, and a material of the outer jacket is an LSZH material composed of non-polyolefin; or a material of the insulating sheath is an LSZH material composed of non-polyolefin, and a material of the outer jacket is an LSZH material composed of polyolefin. The LSZH material composed of polyolefin and the LSZH material composed of non-polyolefin are not easily adhered, so that difficult separation of the outer jacket from the insulating sheath can be avoided.

In a possible implementation, the material of the outer jacket includes a slipping agent. In this way, a friction factor of a surface of the cable can be reduced, thereby reducing a force of friction between the cable and the pipe.

In a possible implementation, an optical fiber connector is prefabricated on one end that is of the cable and that is away from the traction member. In this way, the second end of the cable may be plugged in an ATB by using the optical fiber connector. The connection is convenient, and plug-and-play is implemented.

According to the cable provided in this application, the reinforcing core wire may improve the strength and toughness of the cable, so that the cable easily passes through a pipe. In addition, when the outer jacket is stripped off, difficult separation caused by adhesion of the outer jacket to the insulating sheath can be avoided.

According to the auxiliary tool for wall penetration of a cable provided in the embodiments of this application, when a drop cable is laid, the cable may be fastened to the second end of the traction rod, then the traction head of the traction member passes into an in-wall pipe, and the cable continues to be pushed. Because the traction head has a smooth surface, the traction head can successfully and smoothly pass through an angle of the in-wall pipe. After the traction head passes through the angle, the traction rod connected behind the traction head may enter the angle. Because the traction rod is made of an elastic material, the traction rod may have an elastic deformation. Therefore, the traction rod may experience a bending deformation having a radian similar to that of the angle, so that the traction rod successfully passes through the angle and guides the cable fastened to the second end of the traction rod to pass through the angle along a same radian. Therefore, the cable easily passes through the angle during laying construction, and one person can lay the drop cable with low construction costs.

In a possible implementation, the second end of the traction rod is provided with a mounting hole, the mounting hole extends in a length direction of the traction rod, and the cable passes through the mounting hole and is adhesively fastened to the mounting hole. In this way, the cable is conveniently mounted and stably connected.

In a possible implementation, the traction head is of a spherical structure, an ellipsoidal structure, or a pyramid structure.

In a possible implementation, the traction head is provided with a through hole. In this way, a mounting manner of a pull cable may be compatible, and a weight of a puller may be reduced by using the through hole, thereby reducing a force of friction between the traction head and the in-wall pipe.

The traction rod is a flat rod. Therefore, the traction rod conveniently passes through the in-wall pipe of narrow space.

The auxiliary tool further includes a guide pipe, where a pipe hole of the guide pipe is used to allow the cable to pass therethrough, and a gap exists between an inner wall of the guide pipe and an outer wall of the cable. In this way, the cable may conveniently pass through one or more angles at an inlet of the in-wall pipe, so that construction is more convenient and efficiency is higher.

In a possible implementation, an inner wall of the pipe hole of the guide pipe is coated with a smooth coating. Therefore, a friction resistance of the cable passing through the guide pipe is reduced.

In a possible implementation, the foregoing smooth coating may be a silicon core layer.

In a possible implementation, the guide pipe may be made of a flame retardant material.

In a possible implementation, the guide pipe may be made of a low smoke zero halogen material.

### BRIEF DESCRIPTION OF DRAWINGS

FIG. 1 is a schematic structural diagram of an auxiliary tool for wall penetration of a cable according to an embodiment of this application;
FIG. 2 is a top view of FIG. 1;
FIG. 3 is a schematic structural diagram of an auxiliary tool for wall penetration of a cable and with a guide pipe according to an embodiment of this application;
FIG. 4 is a schematic sectional structural diagram of a guide pipe in an auxiliary tool for wall penetration of a cable according to an embodiment of this application;
FIG. 5 is a schematic sectional structural diagram of a cable according to an embodiment of this application;
FIG. 6 is a schematic sectional structural diagram of another cable according to an embodiment of this application; and
FIG. 7 is a schematic structural diagram of an assembled structure of a cable and an auxiliary tool for wall penetration when passing into an in-wall pipe according to an embodiment of this application.

### DESCRIPTION OF EMBODIMENTS

Embodiments of this application relate to an auxiliary tool for wall penetration of a cable, a cable, and an assembled structure thereof. Concepts in the foregoing embodiments are simply described below:

Optical fiber: An optical fiber has a full name of a light-guide fiber, which is a fiber made of glass or plastic, and may be used as an optical conduction tool.

Cable: A cable includes a cable core including a quantity of optical fibers arranged in a particular manner. The cable core is wrapped with a sheath, and some cable cores are further wrapped with outer jackets. The cable is a communications line used to implement optical signal transmission.

Access terminal box: An access terminal box is an end connector of a cable. One end of the access terminal box is the cable, and the other end is a pigtail. The access terminal box is equivalent to a device dividing a cable into single optical fibers.

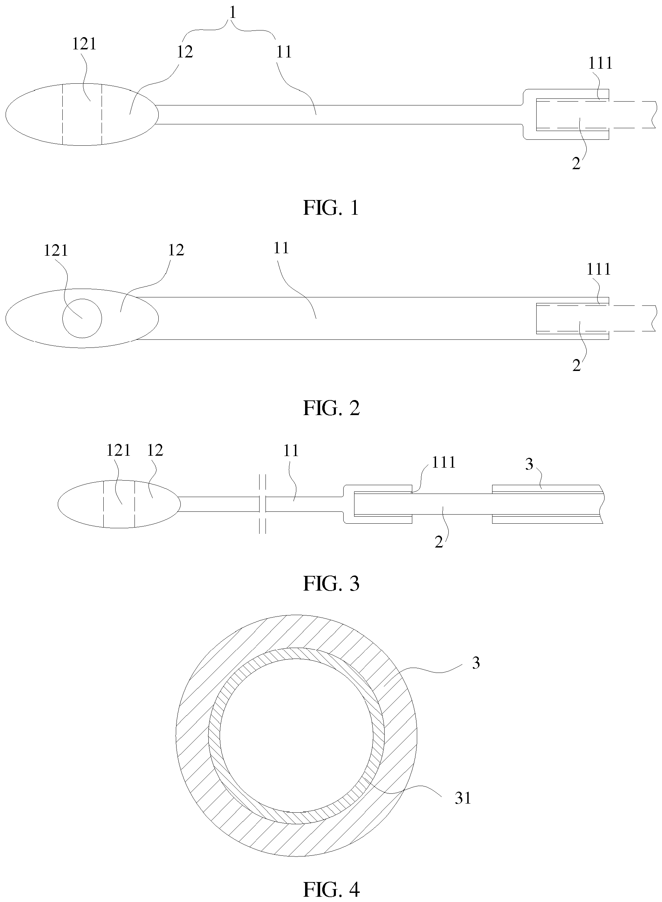

As shown in FIG. 1 and FIG. 2, an embodiment of this application provides an auxiliary tool for wall penetration of a cable, including a traction member 1, where the traction member 1 includes a traction rod 11 and a traction head 12 fastened to a first end of the traction rod 11, the traction rod 11 is made of an elastic material, the traction head 12 has a smooth surface, and a second end of the traction rod 11 is used to fasten a cable 2.

According to the auxiliary tool for wall penetration of a cable provided in this embodiment of this application, when a drop cable 2 is laid, the cable 2 may be fastened to the second end of the traction rod 11, then the traction head 12 of the traction member 1 passes into an in-wall pipe, and the cable 2 continues to be pushed. Because the traction head 12 has a smooth surface, the traction head 12 can successfully and smoothly pass through an angle of the in-wall pipe. After the traction head 12 passes through the angle, the traction rod 11 connected behind the traction head may enter the angle. Because the traction rod 11 is made of an elastic material, the traction rod 11 may have an elastic deformation. Therefore, the traction rod 11 may experience a bending deformation having a radian similar to that of the angle, so that the traction rod 11 successfully passes through the angle and guides the cable 2 fastened to the second end of the traction rod 11 to pass through the angle along a same radian. Therefore, the cable 2 easily passes through the angle during laying construction, and one person can lay the drop cable 2 with low construction costs.

To conveniently fasten the cable 2 to the traction rod 11, as shown in FIG. 2, the second end of the traction rod 11 may be provided with a mounting hole 111, the mounting hole 111 extends in a length direction of the traction rod 11, and then the cable 2 passes through the mounting hole 111 and is adhesively fastened to the mounting hole 111. The structure is conveniently mounted and stably connected.

The traction head 12 may have a plurality of options in terms of its shape, provided that the traction head 12 has a smooth guide face which helps the traction head 12 easily pass through the angle. For example, the traction head 12 may be a spherical structure, an ellipsoidal structure, a pyramid structure, or the like. When the spherical structure, the ellipsoidal structure, or the pyramid structure passes through the angle, an outer surface of each of the structures may guide the traction head 12, so that the traction head 12 conveniently passes through the angle, and the traction head 12 is not blocked at the angle.

To make the auxiliary tool compatible with a mounting manner of a pull cable, as shown in 2, the traction head 12 may be provided with a through hole 121. When a pull rope is embedded in the in-wall pipe, the pull rope may be tied at the through hole 121, and the pull rope is pulled at an outlet of the in-wall pipe to enable the cable 2 to pass through the in-wall pipe. In addition, a weight of a puller may be reduced by using the through hole 121, thereby reducing a force of friction between the traction head 12 and the in-wall pipe.

To reduce a sectional area of the traction rod 11, as shown in FIG. 1 and FIG. 2, the traction rod 11 is manufactured as a flat rod. When a sectional diameter of the cylindrical rod is equal to a width of the flat rod, because the flat rod has a relatively small thickness, the flat rod occupies smaller space, so that the flat rod more easily passes through the in-wall pipe of narrow space.

Specifically, a material of the traction rod 11 may use thermoplastic urethane (Thermoplastic Urethane, TPU) material with good elasticity, a bending modulus of the traction rod 11 is approximately 1200 MPa, and hardness of the traction rod 11 is approximately 76 D, so that the traction rod 11 has appropriate toughness.

To facilitate the cable 2 passing through an angle close to an inlet of the in-wall pipe, as shown in FIG. 3, a guide pipe 3 may be sleeved on the cable 2, and a gap exists between an inner wall of the guide pipe 3 and an outer wall of the cable 2. When the cable 2 is laid, the traction member 1 passes into the in-wall pipe, and then the cable 2 sleeved with the guide pipe 3 passes into the in-wall pipe, so that the guide pipe 3 is laid on one or more angles close to the inlet of the in-wall pipe, the guide pipe 3 is fastened, and the cable 2 continues to be pushed. Due to the guide pipe 3, the cable 2 can successfully pass through the one or more angles close to the inlet of the in-wall pipe, so that construction is more convenient and efficiency is higher.

As shown in FIG. 4, to reduce a force of friction between the guide pipe 3 and the cable 2, an inner wall of the pipe hole of the guide pipe 3 may be coated with a smooth coating 31. Therefore, a friction resistance of the cable 2 passing through the guide pipe 3 is reduced. Specifically, the inner wall of the pipe hole of the guide pipe 3 may be coated with a silicon core layer, so that a friction factor of the inner wall of the pipe hole of the guide pipe 3 is less than or equal to 0.2.

The guide pipe 3 may be made of a flame retardant material, for example, may be made of polyvinyl chloride (Polyvinyl chloride, PVC), or may be made of a low smoke zero halogen (Low Smoke Zero Halogen, LSZH) material. The LSZH material has relatively good flame resistance, and releases a small smoke and carcinogen in combustion, facilitating indoor environmental protection.

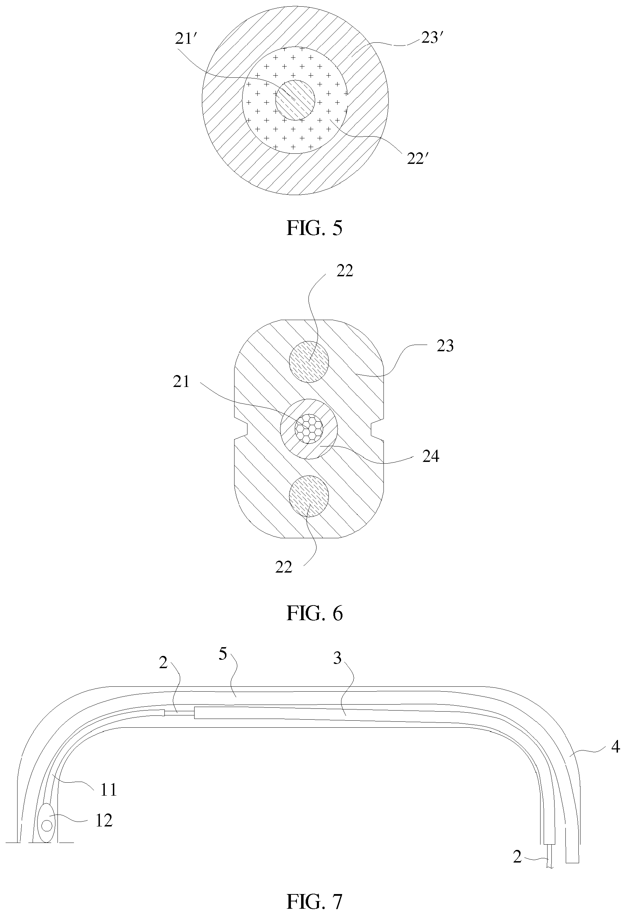

Under assistance of the foregoing auxiliary tool, the cable 2 can relatively conveniently pass through the in-wall pipe. However, a structural feature of the cable 2 also affects convenience of passing through the pipe by the cable 2. In a possible implementation, the cable 2 may use a round structure shown in FIG. 5 as a sectional structure, including a cable core 21', a reinforcing layer 22' wrapping the cable core 21', and an outer jacket 23' wrapping the reinforcing layer 22'. The reinforcing layer 22' may use aramid yarn or glass yarn. The structure can improve toughness of the cable 2, so that the cable 2 easily passes through the pipe.

In addition, the cable 2 may use a structure shown in FIG. 6 as a sectional structure, including a cable core 21. The cable core 21 is wrapped with an outer jacket 23. A reinforcing core wire 22 passes through the outer jacket 23 in an extension direction of the cable core 21. There may be one or more reinforcing core wires 22. In the structure shown in FIG. 6, there are two reinforcing core wires 22, and the two reinforcing core wires 22 are symmetrically disposed on two sides of the cable core 21. The reinforcing core wire 22 may improve strength and toughness of the cable 2, so that the cable 2 easily passes through the pipe.

In the foregoing embodiment, the cable core 21 may be a bare fiber or may be an optical fiber wrapped with an insulating sheath 24, as shown in FIG. 6. When the cable core 21 is a bare fiber, after the outer jacket is stripped off from the cable 2 passing through a wall, the cable 2 supports only fiber splicing and does not support direct coiling and storage. When the cable core 21 is an optical fiber wrapped with an insulating sheath 24, after the outer jacket is stripped off from the cable 2 passing through a wall, the cable 2 supports both fiber splicing and direct coiling and storage. However, to avoid adhesion of the insulating sheath 24 of the cable core 21 to the outer jacket 23, materials that are not easily adhered to each other may be selected for the insulating sheath 24 and the outer jacket 23, so that the insulating sheath 24 and the outer jacket 23 are not adhered to each other when the insulating sheath 24 and the outer jacket 23 are in close contact with each other.

Therefore, the cable has particular strength or hardness, and, during a wall penetration operation, the cable does not easily bend, and the insulating sheath 24 and the outer jacket 23 are not adhered. Therefore, the outer jacket 23 is more easily stripped off from the insulating sheath 24, and difficult separation caused by adhesion of the outer jacket 23 to the insulating sheath 24 can be avoided.

Specifically, because the LSZH material has desirable environmental performance and flame resistance, both the insulating sheath 24 and the outer jacket 23 may be made of the LSZH material. However, to avoid adhesion of the outer jacket 23 to the insulating sheath 24, an LSZH material composed of polyolefin may be selected as a material of the insulating sheath 24, and an LSZH material composed of non-polyolefin may be selected as a material of the outer jacket 23. Alternatively, an LSZH material composed of non-polyolefin is selected as a material of the insulating sheath 24, and an LSZH material composed of polyolefin is selected as a material of the outer jacket 23. The LSZH material composed of polyolefin and the LSZH material composed of non-polyolefin are not easily adhered, so that difficult separation of the outer jacket 23 from the insulating sheath 24 can be avoided. Hardness of the outer jacket 23 may be selected as at least 50 Shore D.

Specifically, the LSZH material composed of polyolefin may be a material including polyethylene (polyethylene, PE) and ethylene-vinyl acetate copolymer (ethylene-vinyl acetate copolymer, EVA), and the LSZH material composed of non-polyolefin be a thermoplastic material including polyolefin elastomer (Polyolefin elastomer, POE), thermoplastic polyolefin (Thermoplastic Polyolefin, TPO), styrenic thermoplastic elastomer, and the like.

To reduce a force of friction between the cable 2 and the pipe, a modifier, such as a slipping agent, may be added to the material of the outer jacket 23 to reduce a friction factor of a surface of the cable 2. Meanwhile, smoothness of the surface of the cable 2 may be improved by adjusting a processing temperature of the outer jacket 23, thereby further reducing the friction coefficient. The friction factor may be controlled within 0.2.

A material of the reinforcing core wire 22 may be a metal material or may be a non-metal material. The reinforcing core wire 22 made of a metal material has greater rigidity, and more easily passes through the pipe. The reinforcing core wire 22 made of a non-metal material can avoid safety risks such as electric conduction and lightning conduction, so that the reinforcing core wire is more suitable for indoor use. Specifically, the material of the reinforcing core wire 22 may use fiber reinforced polymer/plastic (Fiber Reinforced Polymer/Plastic, FRP).

This application further provides an assembled structure of a cable and an auxiliary tool for wall penetration, including the auxiliary tool according to any one of the foregoing embodiments of the auxiliary tool and the cable according to any one of the foregoing embodiments of the cable. A first end of the cable is connected to a second end of the traction rod 11 of the auxiliary tool.

According to the assembled structure of a cable and an auxiliary tool for wall penetration provided in the embodiments of this application, when a drop cable 2 is laid, the cable 2 may be fastened to the second end of the traction rod 11, then the traction head 12 of the traction member 1 passes into an in-wall pipe, and the cable 2 continues to be pushed. Because the traction head 12 has a smooth surface, the traction head 12 can successfully and smoothly pass through an angle of the in-wall pipe. After the traction head 12 passes through the angle, the traction rod 11 connected behind the traction head may enter the angle. Because the traction rod 11 is made of an elastic material, the traction rod 11 may have an elastic deformation. Therefore, the traction rod 11 may experience a bending deformation having a radian similar to that of the angle, so that the traction rod 11 successfully passes through the angle and guides the cable 2 fastened to the second end of the traction rod 11 to pass through the angle along a same radian. Therefore, the cable 2 easily passes through the angle during laying construction, and one person can lay the drop cable 2 with low construction costs.

As shown in FIG. 3, when the auxiliary tool includes a guide pipe 3, the cable 2 passes through the guide pipe 3, and a gap exists between an inner wall of the guide pipe 3 and an outer wall of the cable 2. The guide pipe 3 may help the cable 2 successfully pass through one or more angles at an inlet of the in-wall pipe, so that construction is more convenient and efficiency is higher.

FIG. 7 is a schematic structure diagram of a cable and an auxiliary tool for wall penetration when passing into an in-wall pipe 4. Even if another cable 5 is laid in the in-wall pipe 4, the cable 2 can still successfully pass through the in-wall pipe 4 under assistance of the auxiliary tool for wall penetration.

To facilitate connection of a drop cable to an ATB, an optical fiber connector may be prefabricated on a second end of the cable 2, so that the second end of the cable 2 may be plugged in the ATB by using the optical fiber connector. The connection and disassembly are convenient, and plug-and-play is implemented.

In the descriptions of this specification, the described specific features, structures, materials, or characteristics may be combined in a proper manner in any one or more of the embodiments or examples.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An assembled structure of a cable (2) and an auxiliary tool for wall penetration when passing into an in-wall pipe (4), said auxiliary tool comprising a traction member (1), wherein the traction member (1) comprises a flat traction rod (11) and a traction head (12) fastened to a first end of the traction rod, the traction rod is made of an elastic material, the traction head has a smooth surface, and a second end of the traction rod is securely connected to one end of the cable (2), **characterised in that**
the auxiliary tool further comprises a guide pipe, wherein a pipe hole of the guide pipe is used to allow the cable to pass therethrough, and a gap exists between an inner wall of the guide pipe and an outer wall of the cable.

2. The assembled structure according to claim 1, wherein the second end of the traction rod (11) is provided with a mounting hole (111), the mounting hole extends in a length direction of the traction rod, and the cable (2) passes through the mounting hole and is adhesively fastened to the mounting hole.

3. The assembled structure according to claim 1 or 2, wherein the traction head (12) is of a spherical structure, an ellipsoidal structure, or a pyramid structure.

4. The assembled structure according to any one of claims 1 to 3, wherein the traction head (12) is provided with a through hole (121).

5. The assembled structure according to any one of claims 1 to 4, wherein an inner wall of the pipe hole of the guide pipe (3) is coated with a smooth coating (31).

6. The assembled structure according to any one of claims 1 to 5, wherein a material of the guide pipe (3) is an LSZH material composed of polyolefin.

7. The assembled structure according to any one of claims 1 to 6, wherein the cable comprises a cable core (21), the cable core is wrapped with an insulating sheath (24), an outer side of the insulating sheath is wrapped with an outer jacket (23), a reinforcing core wire passes through the outer jacket in an extension direction of the cable core, and the insulating sheath and the outer jacket are not adhered to each other when the insulating sheath and the outer jacket are in close contact with each other.

8. The assembled structure according to claim 7, wherein a material of the insulating sheath (24) is an LSZH material composed of polyolefin, and a material of the outer jacket (23) is an LSZH material composed of non-polyolefin; or a material of the insulating sheath is an LSZH material composed of non-polyolefin, and a material of the outer jacket is an LSZH material composed of polyolefin.

9. The assembled structure according to claim 7 or 8, wherein the material of the outer jacket (23) comprises a slipping agent.

10. The assembled structure according to any one of claims 1 to 9, wherein an optical fiber connector is prefabricated on one end that is of the cable (2) and that faces away from the traction member (1).

## Patentansprüche

1. Zusammengesetzte Struktur aus einem Kabel (2) und einem Hilfswerkzeug für eine Wanddurchdringung bei einem Einführen in ein wandintegriertes Rohr (4), wobei das Hilfswerkzeug ein Zugelement (1) umfasst, wobei das Zugelement (1) eine flache Zugstange (11) und einen Zugkopf (12), der an einem ersten Ende der Zugstange befestigt ist, umfasst, die Zugstange aus einem elastischen Material hergestellt ist, der Zugkopf eine glatte Oberfläche aufweist und ein zweites Ende der Zugstange fest mit einem Ende des Kabels (2) verbunden ist, **dadurch gekennzeichnet, dass** das Hilfswerkzeug ferner ein Führungsrohr umfasst, wobei ein Rohrloch des Führungsrohrs verwendet wird, um zu ermöglichen, dass das Kabel dahindurchgeführt wird, und ein Spalt zwischen einer Innenwand des Führungsrohrs und einer Außenwand des Kabels existiert.

2. Zusammengesetzte Struktur nach Anspruch 1, wobei das zweite Ende der Zugstange (11) mit einem Montageloch (111) versehen ist, sich das Montageloch in einer Längenrichtung der Zugstange erstreckt und das Kabel (2) durch das Montageloch geführt und an dem Montageloch haftend befestigt ist.

3. Zusammengesetzte Struktur nach Anspruch 1 oder 2, wobei der Zugkopf (12) eine kugelförmige Struktur, eine ellipsoide Struktur oder eine Pyramidenstruktur vorweist.

4. Zusammengesetzte Struktur nach einem der Ansprüche 1 bis 3, wobei der Zugkopf (12) mit einem Durchgangsloch (121) versehen ist.

5. Zusammengesetzte Struktur nach einem der Ansprüche 1 bis 4, wobei eine Innenwand des Rohrlochs des Führungsrohrs (3) mit einer glatten Beschichtung (31) beschichtet ist.

6. Zusammengesetzte Struktur nach einem der Ansprüche 1 bis 5, wobei ein Material des Führungsrohrs (3) ein LSZH-Material, das aus Polyolefin besteht, ist.

7. Zusammengesetzte Struktur nach einem der Ansprüche 1 bis 6, wobei das Kabel einen Kabelkern (21) umfasst, der Kabelkern mit einer Isolierhülle (24) umwickelt ist, eine Außenseite der Isolierhülle mit einem Außenmantel (23) umwickelt ist, ein verstärkender Kerndraht durch den Außenmantel in einer Erstreckungsrichtung des Kabelkerns geführt ist und die Isolierhülle und der Außenmantel nicht aneinander haften, wenn die Isolierhülle und der Außenmantel in engem Kontakt miteinander stehen.

8. Zusammengesetzte Struktur nach Anspruch 7, wobei ein Material der Isolierhülle (24) ein LSZH-Material, das aus Polyolefin besteht, ist und ein Material des Außenmantels (23) ein LSZH-Material, das aus Nichtpolyolefin besteht, ist; oder ein Material der Isolierhülle ein LSZH-Material, das aus Nichtpolyolefin besteht, ist und ein Material des Außenmantels ein LSZH-Material, das aus Polyolefin besteht, ist.

9. Zusammengesetzte Struktur nach Anspruch 7 oder 8, wobei das Material des Außenmantels (23) ein Gleitmittel umfasst.

10. Zusammengesetzte Struktur nach einem der Ansprüche 1 bis 9, wobei ein Verbinder für optische Fasern an einem Ende, das zu dem Kabel (2) gehört und das von dem Zugelement (1) abgewandt ist, vorgefertigt ist.

## Revendications

1. Structure assemblée d'un câble (2) et d'un outil auxiliaire pour une pénétration de paroi lors d'un passage dans un tuyau encastrable (4), ledit outil auxiliaire comprenant un élément de traction (1), dans laquelle l'élément de traction (1) comprend une tige de traction plate (11) et une tête de traction (12) fixée à une première extrémité de la tige de traction, la tige de traction est faite d'un matériau élastique, la tête de traction a une surface lisse, et une seconde extrémité de la tige de traction est solidement reliée à une extrémité du câble (2), **caractérisée en ce que** l'outil auxiliaire comprend en outre un tuyau de guidage, dans laquelle un trou de tuyau du tuyau de guidage est utilisé pour permettre au câble de passer à travers celui-ci, et un espace existe entre une paroi interne du tuyau de guidage et une paroi externe du câble.

2. Structure assemblée selon la revendication 1, dans laquelle la seconde extrémité de la tige de traction (11) est pourvue d'un trou de montage (111), le trou de montage s'étend dans une direction de longueur de la tige de traction, et le câble (2) passe à travers le trou de montage et est fixé de manière adhésive au trou de montage.

3. Structure assemblée selon la revendication 1 ou 2, dans laquelle la tête de traction (12) a une structure sphérique, une structure ellipsoïdale, ou une structure pyramidale.

4. Structure assemblée selon l'une quelconque des revendications 1 à 3, dans laquelle la tête de traction (12) est pourvue d'un trou traversant (121).

5. Structure assemblée selon l'une quelconque des revendications 1 à 4, dans laquelle une paroi interne du trou de tuyau du tuyau de guidage (3) est recouverte d'un revêtement lisse (31).

6. Structure assemblée selon l'une quelconque des revendications 1 à 5, dans laquelle un matériau du tube de guidage (3) est un matériau LSZH composé de polyoléfine.

7. Structure assemblée selon l'une quelconque des revendications 1 à 6, dans laquelle le câble comprend une âme de câble (21), l'âme de câble est enveloppée d'une gaine isolante (24), un côté externe de la gaine isolante est enveloppé d'une enveloppe externe (23), un fil d'âme de renforcement passe à travers l'enveloppe externe dans une direction d'extension de l'âme de câble, et la gaine isolante et l'enveloppe externe ne sont pas collées l'une à l'autre lorsque la gaine isolante et l'enveloppe externe sont en contact étroit l'une avec l'autre.

8. Structure assemblée selon la revendication 7, dans laquelle un matériau de la gaine isolante (24) est un matériau LSZH composé de polyoléfine, et un matériau de l'enveloppe externe (23) est un matériau LSZH composé de non-polyoléfine ; ou un matériau de la gaine isolante est un matériau LSZH composé de non-polyoléfine, et un matériau de l'enveloppe externe est un matériau LSZH composé de polyoléfine.

9. Structure assemblée selon la revendication 7 ou 8, dans laquelle le matériau de l'enveloppe externe (23) comprend un agent glissant.

10. Structure assemblée selon l'une quelconque des revendications 1 à 9, dans laquelle un connecteur de fibre optique est préfabriqué sur une extrémité qui fait partie du câble (2) et qui est à l'opposé de l'élément de traction (1).
